# DEMANDE DE BREVET EUROPEEN

(11) **EP 4 530 122 A1**
(43) Date de publication de la demande: **02.04.2025**
(21) Numéro de dépôt: 24202471.9
(22) Date de dépôt: 25.09.2024
(51) Int. Cl.: B60L 50/75, B60L 58/31, B60L 58/40

(54) **SYSTEME D'ALIMENTATION ELECTRIQUE COMPRENANT UNE PILE A COMBUSTIBLE**

(30) Priorité: 26.09.2023 FR 2310210
(71) Demandeur: Commissariat à l'Energie Atomique et aux Energies Alternatives, 75015 Paris (FR)
(72) Inventeur: DELHOMMAIS, Mylène, 38054 GRENOBLE Cedex 09 (FR); CHATROUX, Daniel, 38054 GRENOBLE Cedex 09 (FR); MERCIER, Sylvain, 38054 GRENOBLE Cedex 09 (FR)
(74) Mandataire: Atout PI Laplace

(57) **Abrégé**

L'invention concerne un système d'alimentation électrique (100), notamment configuré pour être embarqué dans un véhicule, comprenant : une pile à combustible (110) ; une batterie (112), notamment configurée pour entraîner ledit véhicule ; un convertisseur de tension DCDC entrelacé (114) configuré pour alimenter ladite batterie (112) à partir de ladite pile à combustible (110) ; un compresseur (116) configuré pour délivrer un gaz oxydant comprimé à ladite pile à combustible (110) ; un onduleur (118) configuré pour alimenter ledit compresseur (116) ; ledit convertisseur de tension DCDC entrelacé (114) comprenant une pluralité de branches parallèles, dites « branches monodirectionnelles » (114m), comportant chacune un convertisseur élévateur monodirectionnel (50) configuré pour alimenter ladite batterie (112) à partir de la pile à combustible (110) ; et au moins une branche parallèle, dite « branche bidirectionnelle » (114b), comportant un convertisseur élévateur bidirectionnel (60) et une diode (70) dont l'anode est connectée à la pile à combustible (110) et la cathode à une première borne (61) du convertisseur bidirectionnel (60).

## Description

L'invention concerne un système d'alimentation électrique comprenant une pile à combustible, notamment configuré pour être embarqué dans un véhicule. L'invention comprend en outre un procédé d'alimentation électrique d'un équipement électrique utilisant le système selon l'invention.

Il est prévu une accélération du développement des systèmes d'alimentation électrique comprenant une pile à combustible, notamment pour les mobilités lourdes, du fait de leur absence d'émission de gaz à effet de serre. Cependant, un frein à leur développement réside dans leur complexité de mise en oeuvre, en particulier en tant que système embarqué, par exemple dans un véhicule.

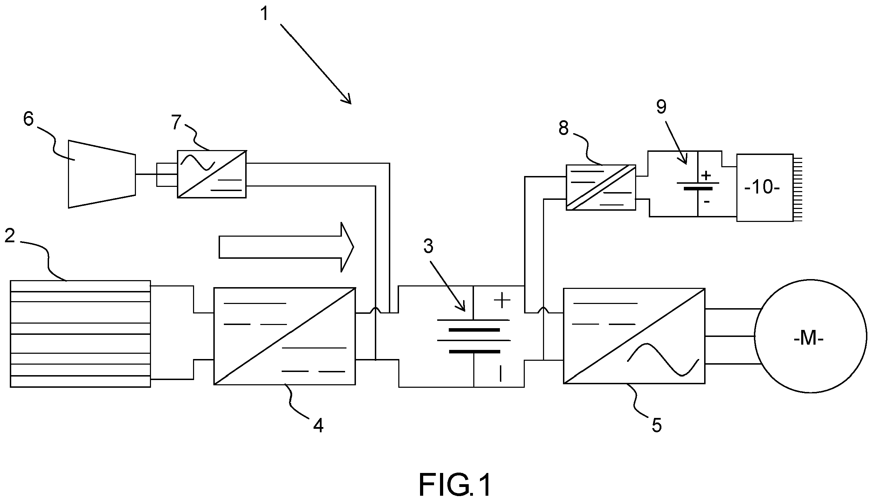

On connaît un système d'alimentation électrique comprenant une pile à combustible embarqué dans un véhicule, tel qu'illustré en figure 1. En particulier, le système d'alimentation électrique 1 délivre une tension de 100kW à un moteur M entraînant le véhicule. Le système d'alimentation électrique 1 comprend une pile à combustible 2 qui produit de l'énergie électrique. La pile à combustible 2 opère typiquement à une puissance d'environ 110kW, avec une tension de 300V et un courant de 360A. La tension délivrée par la pile à combustible 2 n'est pas suffisamment élevée pour alimenter directement une première batterie 3, qui présente à ses bornes une tension de 800V par exemple. Le système d'alimentation électrique 1 comprend donc un convertisseur DCDC élévateur monodirectionnel 4 de 11 0kW, délivrant un courant d'environ 125A à la première batterie 3 sous une tension d'environ 800V. La première batterie 3 alimente le moteur M qui entraine le véhicule. Un premier onduleur 5 convertit la tension continue délivrée par la première batterie 3 en une tension alternative permettant l'actionnement du moteur M. Notamment, le moteur M est triphasé et a une puissance de 100kW. Outre l'entrainement du véhicule, la première batterie 3 peut fournir l'alimentation électrique de composants du système d'alimentation électrique 1 et de composants auxiliaires du véhicule. Ainsi, le système d'alimentation électrique 1 comprend en outre un compresseur 6 qui délivre à la pile à combustible un gaz oxydant, tel que l'air ou l'oxygène de l'air. Le compresseur 6 tire également son énergie de la première batterie 3 grâce à un deuxième onduleur 7 qui convertit la tension continue délivrée par la première batterie en une tension alternative entraînant l'actionnement du compresseur 6, via un moteur non représenté. Le compresseur 6 a notamment une puissance de 10kW. Le deuxième onduleur 7 a par exemple une puissance de 10kW, et opère notamment à une tension de 800V et un courant de 12,5A. Le système d'alimentation électrique 1 peut comprendre un convertisseur DCDC 8 convertissant la haute tension de la première batterie 3 en une basse ou moyenne tension, par exemple 12V, pour une deuxième batterie 9. Par exemple, le convertisseur DCDC 8 opère à 2,4kW, et notamment reçoit un courant de 3A depuis la première batterie 3 et délivre un courant de 210A à la deuxième batterie 9. La deuxième batterie 9 délivre sa tension de sortie à un boîtier de distribution 10. Celui-ci distribue l'énergie aux composants auxiliaires du véhicule.

En étant connecté directement à la première batterie 3, le deuxième onduleur 7 doit supporter la tension de 800V délivrée par la première batterie 3. Les composants du deuxième onduleur 7, en particulier ses interrupteurs, doivent supporter un tel niveau de tension, ce qui alourdit et rend plus coûteux le deuxième onduleur 7. Cependant, au démarrage du système d'alimentation électrique, le compresseur 6 doit pouvoir recevoir son alimentation électrique indépendamment de la pile à combustible 2, car le compresseur 6 sert à initier la production d'énergie par la pile à combustible 2 en lui délivrant le gaz oxydant. Il est donc aussi essentiel que le compresseur 6 puisse être alimenté par la première batterie au moins pendant la phase de démarrage du système d'alimentation électrique.

Il est donc recherché un système d'alimention électrique comprenant une pile à combustible qui permette l'alimentation électrique du compresseur de manière moins couteuse et indépendamment de la pile à combustible au moins pendant une phase de démarrage du système d'alimentation électrique.

A cet effet, l'invention propose un système d'alimentation électrique, notamment configuré pour être embarqué dans un véhicule, comprenant :
- une pile à combustible ;
- une batterie, notamment configurée pour entraîner ledit véhicule ;
- un convertisseur de tension DCDC entrelacé configuré pour alimenter ladite batterie à partir de ladite pile à combustible ;
- un compresseur configuré pour délivrer un gaz oxydant comprimé à ladite pile à combustible ;
- un onduleur configuré pour alimenter ledit compresseur ;

ledit convertisseur de tension DCDC entrelacé comprenant une pluralité de branches parallèles, dites « branches monodirectionnelles », comportant chacune un convertisseur élévateur monodirectionnel configuré pour alimenter ladite batterie à partir de la pile à combustible ; et au moins une branche parallèle, dite « branche bidirectionnelle », comportant un convertisseur élévateur bidirectionnel et une diode dont l'anode est connectée à la pile à combustible et la cathode à une première borne du convertisseur bidirectionnel ;
ledit onduleur étant en outre connecté entre la diode et la première borne du convertisseur élévateur bidirectionnel de manière à recevoir un courant depuis ladite pile à combustible ou depuis ladite batterie pour l'alimentation dudit compresseur.

Ainsi, en connectant l'onduleur alimentant le compresseur entre le convertisseur DCDC entrelacé et la pile à combustible, la tension aux bornes de l'onduleur est égale à la tension aux bornes de la pile à combustible, à la tension de diode près. La tension de la pile à combustible étant plus basse que celle aux bornes de la batterie, l'onduleur peut alors fonctionner à une tension plus basse que dans l'art antérieur illustré en figure 1, par exemple à une tension comprise entre 300 et 400V. Cela réduit le poids et le coût de l'onduleur par rapport au système d'alimentation électrique 1 de l'art antérieur. En outre, en prévoyant au moins une branche bidirectionnelle dans le convertisseur DCDC entrelacé, l'onduleur peut recevoir un courant issu de la batterie, la diode permettant d'éviter un rebouclage du courant vers la pile à combustible. Cela permet d'alimenter le compresseur à partir de la batterie via l'onduleur, indépendamment de la pile à combustible, notamment au moins durant une phase de démarrage du système d'alimentation électrique. En outre, en fonctionnement nominal du système d'alimention électrique, le courant alimentant la batterie depuis la pile à combustible circule notamment par les branches monodirectionnelles, la branche bidirectionnelle pouvant alors elle aussi contribuer à l'alimentation de la batterie.

Selon un mode de réalisation, le convertisseur de tension DCDC entrelacé comprend entre 10 et 30% de branches bidirectionnelles.

Selon un mode de réalisation, la première borne du convertisseur bidirectionnel est configurée pour être connectée à un composant auxiliaire, pour une alimentation dudit composant au démarrage dudit système d'alimentation.

Selon un mode de réalisation, les convertisseurs monodirectionnels et bidirectionnel comprennent des interrupteurs, lesdits interrupteurs étant configurés pour être commandés avec un même rapport cyclique.

Selon un mode de réalisation, les convertisseurs monodirectionnels et bidirectionnel comprennent des interrupteurs, les interrupteurs des convertisseurs monodirectionnels étant configurés pour être commandés avec un premier rapport cyclique, et les interrupteurs du convertisseur bidirectionnel étant configurés pour être commandés avec un deuxième rapport cyclique.

L'invention concerne en outre un procédé d'alimentation électrique d'un équipement électrique, ledit équipement électrique étant notamment destiné à entraîner un véhicule, comprenant l'utilisation d'un système d'alimentation électrique selon l'invention.

Selon un mode de réalisation, un démarrage du système d'alimentation électrique comporte :
- la délivrance à l'onduleur d'un courant issu de la batterie par l'intermédiaire du convertisseur bidirectionnel ;
- la commande de l'onduleur pour alimenter ledit compresseur de manière à initier la production d'énergie électrique par ladite pile à combustible ;
- lorsque la tension de ladite pile à combustible devient supérieure à la somme de la tension à la première borne du convertisseur bidirectionnel et de la tension de seuil de la diode, la mise en état passant de la diode de manière à délivrer à l'onduleur un courant issu de ladite pile à combustible pour une alimentation du compresseur.

Selon une variante, le procédé comprend après le démarrage du système d'alimentation électrique :
- la commande du système d'alimentation électrique de sorte que le courant délivré par la pile à combustible dans la branche bidirectionnelle devienne supérieure à un seuil ;
- lorsque ledit courant délivré par la pile à combustible dans la branche bidirectionnelle est supérieur au dit seuil, l'alimentation du compresseur uniquement à partir d'au moins une première partie du courant délivré par la pile à combustible dans la branche bidirectionnelle.

Selon une variante, le procédé comprend en outre, lorsque ledit courant délivré par la pile à combustible est supérieur au dit seuil, l'alimentation de la batterie par l'intermédiaire du convertisseur bidirectionnel par au moins une deuxième partie du courant délivré par la pile à combustible dans la branche bidirectionnelle.

Selon une variante, le démarrage du système d'alimentation électrique comprend, en parallèle de la délivrance à l'onduleur d'un courant issu de la batterie par l'intermédiaire du convertisseur bidirectionnel, la délivrance d'un courant issu de la batterie par l'intermédiaire du convertisseur bidirectionnel à un composant auxiliaire de l'équipement électrique connecté à la première borne du convertisseur bidirectionnel.

Selon un mode de réalisation, les convertisseurs monodirectionnels et bidirectionnel comprenant des interrupteurs configurés pour être respectivement commandés avec un premier et un deuxième rapports cycliques, le procédé comprend une suralimentation de la pile à combustible du système d'alimentation électrique, ladite suralimentation comportant :
- lorsque la diode est dans un étant passant, la commande du convertisseur bidirectionnel de sorte que la tension à la première borne du convertisseur bidirectionnel augmente jusqu'à ce que la tension aux bornes de la diode soit inférieure à la tension de seuil de la diode ;
- la réception par l'onduleur d'un courant uniquement issu de la batterie ;
- la commande de l'onduleur de sorte à augmenter le débit du compresseur.

D'autres caractéristiques et avantages de la présente invention apparaîtront mieux à la lecture de la description qui suit en relation aux figures annexées suivantes :
[Fig 1] : la figure 1, déjà décrite, illustre un exemple de système d'alimentation électrique selon l'art antérieur ;
[Fig 2] : la figure 2 illustre un exemple de système d'alimention électrique selon l'invention ;
[Fig 3] : la figure 3 représente le système d'alimentation électrique de la figure 2 associé à d'autres composants électriques.

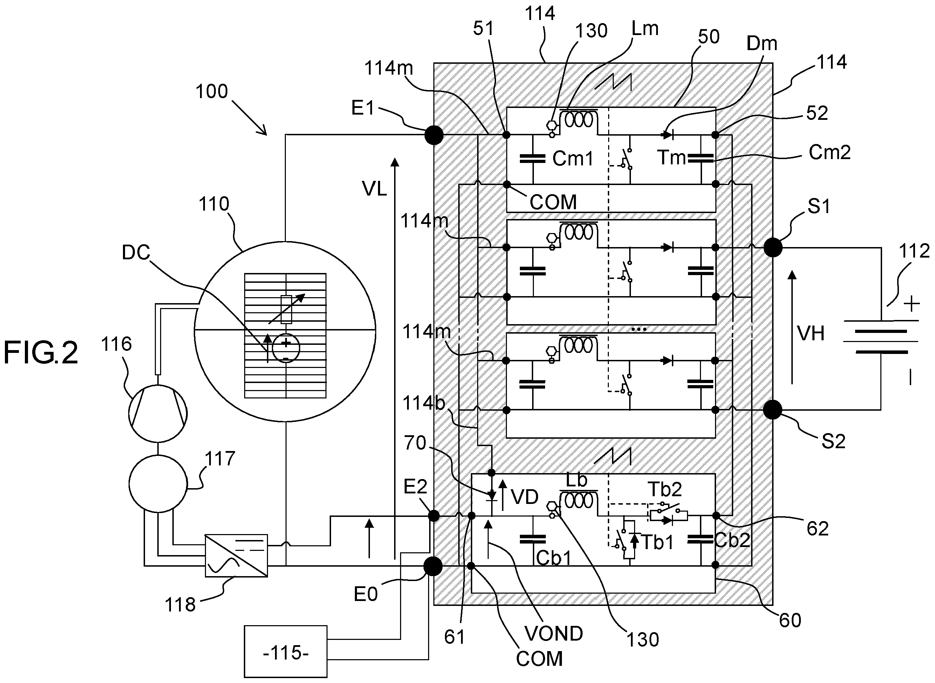

La figure 2 représente un exemple de système d'alimentation électrique 100 selon l'invention. Le système d'alimentation électrique 100 est notamment configuré pour être embarqué dans un véhicule, par exemple un véhicule automobile terrestre tel qu'un poids lourd, ou un véhicule aéronef ou autre.

Le système d'alimention électrique 100 comprend une pile à combustible 110. Par exemple, la pile à combustible 110 comprend une pluralité de cellules. La pile à combustible 110 peut opérer à une puissance de 110kW et délivrer une tension d'environ 300V pour un courant d'environ 360A. Le système d'alimentation électrique 100 comprend en outre une batterie 112, qui est notamment configurée pour alimenter un moteur entraînant le véhicule. La batterie 112 est notamment une batterie haute tension délivrant par exemple une tension d'environ 800V. Le système d'alimention électrique 100 comprend en outre un convertisseur DCDC entrelacé 114, qui opère par exemple à une puissance de 100kW. Le convertisseur de tension DCDC 114 alimente la batterie 112 à partir de la pile à combustible 110. A cet effet, le convertisseur DCDC entrelacé 114 délivre notamment à la batterie 112 une tension de 800V et un courant de 125A.

Le système d'alimention électrique 100 comprend un compresseur 116 qui délivre un gaz oxydant comprimé à ladite pile à combustible 110. Le gaz oxydant comprend par exemple de l'oxygène. Notamment, de manière connue en soi, la pile à combustible 110 reçoit en outre un combustible tel que de l'hydrogène, et produit de l'électricité à partir du gaz oxydant et du combustible. La pile à combustible 110 est par exemple une pile à combustible à hydrogène à membrane échangeuse de protons. Elle opère notamment à une puissance de 100kW, voire supérieure à 100kW, par exemple 110kW. Un onduleur 118 alimente le compresseur 116. En particulier, l'onduleur 118 délivre une tension alternative à un moteur 117 qui entraine le compresseur 116.

Le convertisseur de tension DCDC entrelacé 114 comprend plusieurs branches parallèles 114m, 114b. Les branches parallèles 114m, 114b sont notamment configurées pour convertir une tension entre des bornes d'entrées E0, E1, E2 et de sortie S1, S2 du convertisseur de tension DCDC entrelacé 114. Le convertisseur DCDC entrelacé 114 comprend des branches 114m, dites « branches monodirectionnelles », qui comportent chacune un convertisseur élévateur monodirectionnel 50 qui alimente la batterie 112 à partir de la pile à combustible 110. Au moins une des branches parallèles, forme une branche 114b dite « branche bidirectionnelle ». La branche bidirectionnelle 114b comporte un convertisseur élévateur bidirectionnel 60 et une diode 70 dont l'anode est connectée à la pile à combustible 110 et la cathode à une première borne 61 du convertisseur bidirectionnel 60.

L'onduleur 118 est connecté entre la diode 70 et la première borne 61 du convertisseur élévateur bidirectionnel 60 de manière à recevoir un courant depuis la pile à combustible 110 ou depuis la batterie 112 pour l'alimentation du compresseur 116. Ainsi, la tension V_{L} aux bornes de la pile à combustible 110 est notamment égale à la somme de la tension V_{D} aux bornes de la diode 70 et de la tension V_{OND} aux bornes de l'onduleur 118. L'onduleur 118 peut donc fonctionner à une tension plus basse que dans l'art antérieur illustré en figure 1, par exemple entre 300 et 400V. Cela réduit le poids et le coût de l'onduleur 118 par rapport au système d'alimentation électrique 1 de l'art antérieur. En particulier, la tension V_{OND} aux bornes de l'onduleur 118 est égale à la tension entre la première borne 61 du convertisseur bidirectionnel 60 et une borne commune COM du convertisseur bidirectionnel 60.

En outre, du fait de son montage, la diode 70 permet de rendre l'alimentation du compresseur 116 dépendante ou indépendante de la pile à combustible 110. Ainsi, par exemple, lors d'une phase de démarrage du système d'alimentation 100, la tension V_{L} aux bornes de la pile à combustible 110 étant initialement nulle, la diode 70 est bloquée. Le convertisseur bidirectionnel 60 de la branche bidirectionnel 114b du convertisseur DCDC 114 peut alors délivrer à l'onduleur 118 un courant issu de la batterie 112 pour alimenter le compresseur 116. La diode 70 ne devient passante que lorsque la tension V_{L} aux bornes de la pile à combustible 110 est suffisamment élevée de sorte que la tension V_{D} aux bornes de la diode 70 devienne supérieure à sa tension de seuil. Ainsi, le compresseur 116 peut alors être alimenté par la pile à combustible 110, notamment dans un fonctionnement nominal du système d'alimentation électrique 100, en particulier après la phase de démarrage du système d'alimention électrique 100. De par son montage, la diode 70 ne permet la circulation d'un courant que depuis la pile à combustible 110 vers le convertisseur bidirectionnel 60 ou vers l'onduleur 118 ; et empêche ainsi le rebouclage d'un courant dans la pile à combustible 110.

Un ou plusieurs composants auxiliaires 115 peuvent être connectés à la première borne 61 du convertisseur bidirectionnel 60, notamment via une borne d'entrée E2 du convertisseur DCDC entrelacé 114. Les composants auxiliaires 115 peuvent être des composants du véhicule embarquant le système d'alimention électrique 100, qui sont de préférence mis sous tension avant la fourniture d'énergie électrique par la pile à combustible 110.

La proportion de branches bidirectionnelles 114b par rapport aux branches monodirectionnelles 114m est notamment déterminée par la puissance requise par le compresseur 116 dans la phase de démarrage ou une phase de suralimentation du système d'alimentation électrique 100. La proportion de branches bidirectionnelles 114b peut aussi être fonction de la puissance requise par les composants auxiliaires 115. Par exemple, le convertisseur de tension DCDC entrelacé 114 comprend entre 10 et 30% de branches bidirectionnelles 114b.

En particulier, dans chaque branche monodirectionnelle 114m, une première borne d'entrée 51 du convertisseur monodirectionnel 50 est connectée à une borne positive de la pile à combustible 110 ; et une deuxième borne de sortie 52 est connectée à une borne positive de la batterie 112. Notamment, des bornes négatives respectives de la pile à combustible 110 et de la batterie 112 sont connectées à une borne commune COM du convertisseur monodirectionnel 50. Notamment, chaque convertisseur monodirectionnel 50 forme un convertisseur élévateur configuré pour délivrer à la batterie 112 une tension plus élevée V_{H} à partir de la tension V_{L} provenant de la pile à combustible 110. A cet effet, le convertisseur monodirectionnel 50 peut comprendre une inductance Lm connectée entre la première borne 51 du convertisseur monodirectionnel 50 et le point milieu d'un bras. Le bras comprend notamment un interrupteur Tm connecté entre le point milieu et la borne commune COM ; et une diode Dm dont l'anode est connectée au point milieu du bras et la cathode à la deuxième borne de sortie 52. Des capacités Cm1, Cm2 peuvent être respectivement connectées entre la première borne 51 du convertisseur monodirectionnel 50 et la borne commune COM, et entre la deuxième borne 52 et la borne commune COM.

En particulier, dans la branche bidirectionnelle 114b, la première borne d'entrée 61 du convertisseur bidirectionnel 60 est connectée à la cathode de la diode 70 ; et l'anode de la diode 70 est connectée à la borne positive de la pile à combustible 110. Par ailleurs, la première borne 61 du convertisseur bidirectionnel 60 est notamment connectée à une borne positive de l'onduleur 118. Une deuxième borne de sortie 62 du convertisseur bidirectionnel 60 peut être connectée à la borne positive de la batterie 112. Notamment, les bornes négatives respectives de la pile à combustible 110 et de la batterie 112 sont connectées à la borne commune COM du convertisseur bidirectionnel 60.

En particulier, le convertisseur bidirectionnel 60 forme un convertisseur élévateur configuré pour délivrer à la batterie 112 un courant issu de la pile à combustible 110, la batterie 112 ayant une tension V_{H} plus élevée que la tension V_{L} de la pile à combustible 110. Du fait de son caractère bidirectionnel, le convertisseur bidirectionnel 60 peut en outre délivrer à l'onduleur 118 un courant issu de la batterie 112, la batterie 112 ayant une tension V_{H} plus élevée que la tension V_{OND} de l'onduleur 118.

Le convertisseur bidirectionnel 60 peut comprendre une inductance Lb connectée entre la première borne 61 du convertisseur bidirectionnel 60 et le point milieu d'un bras. Le bras comprend notamment un premier interrupteur Tb1 connecté entre le point milieu et la borne commune COM ; et un deuxième interrupteur Tb2 connecté entre le point milieu du bras et la deuxième borne de sortie 62 du convertisseur bidirectionnel 60. De manière connue en soi, les interrupteurs Tb1, Tb2 peuvent être en parallèle d'une diode respective configurée pour permettre un passage du courant pendant des phases d'ouverture des interrupteurs Tb1, Tb2. Des capacités Cb1, Cb2 peuvent être respectivement connectées entre la première borne 61 du convertisseur bidirectionnel 60 et la borne commune COM, et entre la deuxième borne 62 et la borne commune COM. Les convertisseurs monodirectionnels 50 et convertisseur bidirectionnel 60 peuvent avoir d'autres configurations que celles illustrées sur les figures.

Une phase de démarrage du système d'alimentation électrique 100 va maintenant être décrite dans ce qui suit.

Le système d'alimentation électrique 100 peut avoir été mis à l'arrêt antérieurement, de sorte que la tension aux bornes de la pile à combustible 110 est égale à zéro. Cependant, la batterie 112 est de préférence au moins partiellement chargée.

Le démarrage du système d'alimentation 100 comprend la délivrance à l'onduleur 118 d'un courant issu de la batterie 112 par l'intermédiaire du convertisseur bidirectionnel 60. Le convertisseur bidirectionnel 60 convertit notamment la tension V_{H} de la batterie 112 en une tension V_{OND} plus basse délivrée à l'onduleur 118. A cet effet, les interrupteurs Tb1, Tb2 du convertisseur bidirectionnel 60 peuvent être commandés avec un rapport cyclique. Notamment, le convertisseur bidirectionnel 60 est régulé pour délivrer à l'onduleur 118 une tension de valeur comprise entre 300 et 400V. En particulier, la diode 70 de la branche bidirectionnelle 114b est alors dans un état bloquant, prévenant ainsi la circulation d'un courant depuis ou vers la pile à combustible 110.

L'onduleur 118 est alors commandé pour alimenter le compresseur 116, notamment via le moteur 117. Le compresseur 116 initie la production d'énergie électrique par la pile à combustible 110, notamment en alimentant la pile à combustible 110 en gaz oxydant. Ainsi, le compresseur 116 est alimenté indépendamment de la pile à combustible 110 et peut alors lancer la pile à combustible 110.

La tension V_{L} de la pile à combustible 110 augmente jusqu'à être supérieure à la somme de la tension V_{OND} à la première borne 61 du convertisseur bidirectionnel 60 et de la tension de seuil de la diode 70. La diode 70 entre alors dans un état passant. Un courant issu de la pile à combustible 110 peut alors être délivré à l'onduleur 118 pour une alimentation du compresseur 116, notamment via le moteur 117. Ainsi, lorsque la pile à combustible 110 a une tension suffisante à ses bornes, elle peut délivrer un courant à l'onduleur 118 de manière à alimenter au moins partiellement le compresseur 116.

Pendant le démarrage du système d'alimentation 100, les convertisseurs monodirectionnels 50 peuvent fonctionner en parallèle du convertisseur bidirectionnel 60, notamment pour alimenter la batterie 112 avec un courant issu de la pile à combustible 110.

A l'issue de cette phase de démarrage, le système d'alimentation électrique 100 peut être commandé pour que la pile à combustible 110 délivre un courant dont au moins une partie vient alimenter l'onduleur 118 par la branche bidirectionnelle 114b. Le courant délivré par la pile à combustible 110 peut alimenter uniquement la branche bidirectionnelle 114b dans le cas où les convertisseurs monodirectionnels 50 sont tous inactifs. Alternativement, le courant délivré par la pile à combustible 110 peut être distribué entre la branche bidirectionnelle 114b et les branches monodirectionnelles 114m, pilotées pour assurer une conversion électrique à destination de la batterie 112. Le système d'alimentation électrique 100 peut être commandé pour que la pile à combustible 110 délivre un courant total tel que la part de courant alimentant la branche bidirectionnelle 114b soit plus élevée qu'un seuil de courant. Notamment, le convertisseur DCDC entrelacé 114 détermine le courant extrait de la pile à combustible 110. En particulier, les interrupteurs des convertisseurs élévateurs monodirectionnels 50 et/ou du convertisseur élévateur bidirectionnel 60 sont commandés à cet effet. Le courant déterminé par le convertisseur DCDC entrelacé 114 ne peut notamment être délivré qu'à la condition que l'alimentation en gaz oxydant et en combustible de la pile soit suffisante, ou que l'état de fonctionnement de la pile à combustible 110 le permette. Par exemple, on règle alors le débit de gaz oxydant délivré par le compresseur 116 et/ou celui de combustible, en particulier de l'hydrogène. Lorsque le courant délivré à la branche bidirectionnelle 114b par la pile à combustible 110 est supérieur au seuil de courant, l'alimentation du compresseur 116 s'effectue uniquement à partir de la pile à combustible 110. Autrement dit, le courant délivré par la pile à combustible 110 satisfait les appels de courant de l'onduleur 118, si bien que le courant issu de la batterie 112 à destination de l'onduleur 118 s'annule. Le seuil de courant est de préférence déterminé en fonction d'un courant nominal de fonctionnement de l'onduleur 118. Ainsi, après la phase de démarrage, le compresseur 116 peut être alimenté uniquement par la pile à combustible 110 une fois le seuil atteint.

Au-delà de ce seuil, le convertisseur bidirectionnel 60 n'a plus à alimenter l'onduleur 118 à partir de la batterie 112. Le convertisseur bidirectionnel 60 peut alors convertir, en parallèle des convertisseurs monodirectionnels 50, une énergie délivrée par la pile à combustible 110 vers la batterie 112. Le convertisseur bidirectionnel 60 peut donc venir en soutien aux convertisseurs monodirectionnels 50 lors du fonctionnement nominal du système d'alimentation électrique 100.

Lorsqu'un composant auxiliaire 115 est connecté à la première borne 61 du convertisseur bidirectionnel 60, la phase de démarrage peut comprendre la délivrance au composant auxiliaire 115 d'un courant issu de la batterie 112 par l'intermédiaire du convertisseur bidirectionnel 60. De préférence, le seuil de courant est alors déterminé pour permettre un courant suffisant dans l'onduleur 118 et le composant auxiliaire 115.

Les interrupteurs Tm, Tb1, Tb2 des convertisseurs monodirectionnels 50 et bidirectionnel 60 peuvent être commandés avec un même rapport cyclique, le premier interrupteur Tb1 du convertisseur bidirectionnel 60 étant commandé en phase avec les interrupteurs Tm des convertisseurs monodirectionnels, le deuxième interrupteur Tb2 étant commandé en opposition de phase. Le système d'alimentation électrique 100 peut alors comprendre une seule unité de commande délivrant un même rapport cyclique à tous les convertisseurs 50, 60 du convertisseur DCDC entrelacé 100.

Alternativement, les interrupteurs Tm, Tb1, Tb2 des convertisseurs monodirectionnels 50 et bidirectionnel 60 peuvent être commandés avec des rapports cycliques différents. Ainsi, les interrupteurs Tm des convertisseurs monodirectionnels 50 peuvent être configurés pour être commandés avec un premier rapport cyclique, les interrupteurs Tb1, Tb2 des convertisseurs bidirectionnels 60 étant configurés pour être commandés avec un deuxième rapport cyclique. Un tel contrôle différencié des rapports cycliques n'empêche pas que les premier et deuxième rapports cycliques puissent avoir des valeurs identiques, notamment dans un fonctionnement nominal du système d'alimentation électrique. Dans une telle configuration, une phase de suralimentation de la pile à combustible 110 peut être mise en oeuvre dans le système d'alimentation électrique 100.

La suralimentation de la pile à combustible 110 comprend une augmentation du débit de gaz oxydant pour augmenter l'énergie électrique délivrée par la pile à combustible 110. Notamment, on est initialement dans un fonctionnement nominal du système d'alimentation 100, dans lequel la diode 70 de la branche bidirectionnelle 114b est dans un état passant. Le convertisseur bidirectionnel 60 est alors commandé de sorte que la tension V_{OND} à la première borne 61 du convertisseur bidirectionnel 60 augmente. La tension V_{OND} à la première borne 61, c'est-à-dire la tension V_{OND} de l'onduleur 118, augmente jusqu'à ce que la tension V_{D} aux bornes de la diode 70 soit inférieure à la tension de seuil de la diode 70. La diode 70 entre alors dans un état bloquant. L'onduleur 118 reçoit un courant issu uniquement de la batterie 112. L'onduleur 118 peut alors être commandé de sorte à augmenter le débit du compresseur 116.

En fonctionnement nominal du système d'alimentation 100, les branches 114m, 114b du convertisseur DCDC entrelacé 114 ne fonctionnent pas nécessairement toutes en parallèle. Certaines branches 114m, 114b peuvent être inactives en fonction du rendement optimal du convertisseur DCDC entrelacé 114 pour un couple donné de tension V_{L} de la pile à combustible et de tension V_{H} de la batterie.

Les inductances Lm, Lb des convertisseurs monodirectionnels 114m et bidirectionnel 114b peuvent être couplées ensemble pour améliorer l'intégration du système d'alimentation électrique 100. En outre, les inductances Lm, Lb peuvent être configurées de sorte que leur mode de conduction soit continue aux points de fonctionnement du système d'alimentation électrique 100.

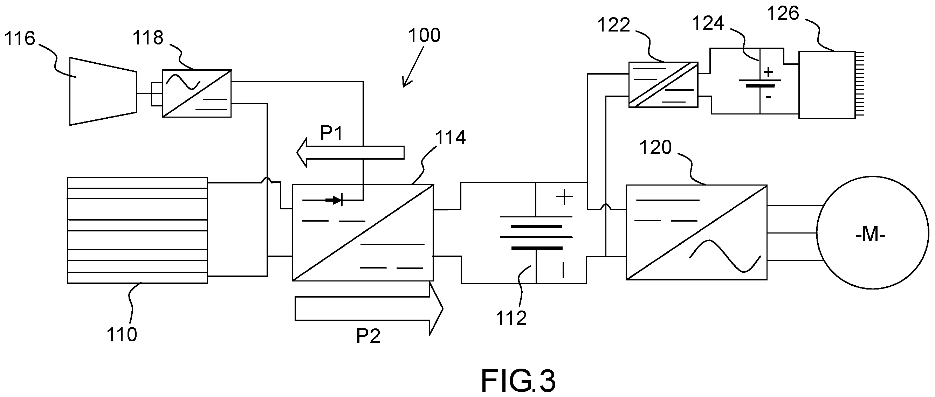

Le système d'alimentation électrique 100 peut être associé avec d'autres composants électriques pour une alimentation électrique d'un véhicule, par exemple comme illustré en figure 3, dans laquelle le moteur 117 actionnant le compresseur 116 n'est pas représenté. La batterie 112 est notamment connectée à un onduleur 120 commandant l'actionnement d'un moteur M qui entraine le véhicule. La batterie 112 peut être par ailleurs connectée à un convertisseur DCDC 122 convertissant la haute tension de la batterie 112 en une basse ou moyenne tension, par exemple 12V. Cette basse ou moyenne tension est délivrée à une batterie 124, qui à son tour alimente un boitier de distribution 126 distribuant l'énergie électrique à des composants auxiliaires du véhicule. Grâce au convertisseur DCDC entrelacé 14, une puissance P1 peut circuler de la batterie 112 vers l'onduleur 118, notamment dans une phase de démarrage ou de suralimentation du système d'alimentation électrique 100. La puissance P1 est par exemple de 10kW. En outre, notamment dans un fonctionnement nominal du système d'alimentation électrique 100, le convertisseur DCDC entrelacé 114 peut délivrer une puissance P2 depuis la pile à combustible 110 vers la batterie 112. La puissance P2 est par exemple de 100kW.

Dans le convertisseur de tension DCDC entrelacé 114, aussi bien les branches monodirectionnelles 114m que la branche bidirectionnelle 114b peuvent être exploitées pour l'alimentation de la batterie 112. Cela permet d'optimiser le dimensionnement du convertisseur de tension 114 par rapport à un convertisseur dans lequel les branches alimentant l'onduleur à partir de la batterie ne seraient dédiées qu'à cette fonction.

Notamment, la tension V_{OND} de l'onduleur 118, la tension V_{L} de la pile à combustible, la tension V_{H} de la batterie sont référencées par rapport à la même borne commune COM. Autrement dit, ladite borne COM est commune à l'onduleur 118, la pile à combustible 110, la batterie 112 et notamment les convertisseurs monodirectionnels 50, et forme leur potentiel de niveau bas.

Chaque convertisseur monodirectionnel 50 et/ou chaque convertisseur bidirectionnel 60 peut comprendre un capteur de courant 130, notamment au niveau de sa première borne 51, 61.

Le convertisseur DCDC entrelacé 114 est facilement modulable, le nombre de branches monodirectionnelles 114m et le nombre de branches bidirectionnelles 114b pouvant être adaptés en fonction des besoins en puissance. En outre, en étant localisée dans la branche bidirectionnelle 114b, la diode 70 ne voit que le courant circulant dans cette branche 114b et pas le courant délivré en sortie de la pile à combustible 110. Le courant circulant dans la branche bidirectionnelle 114b étant inférieur au courant délivré en sortie de la pile à combustible 110, les pertes dans la diode 70 sont plus faibles que si elle était positionnée en sortie de la pile à combustible 110. Par exemple, le courant circulant dans la diode 70 est compris entre 10 et 30% du courant délivré en sortie de la pile à combustible 110. Notamment, le courant circulant dans la diode 70 est compris entre 10 et 50A.

La branche bidirectionnelle 114b et les branches monodirectionnelles 114m sont intégrées dans le convertisseur DCDC entrelacé 114. Celui-ci forme notamment un seul équipement électrique contenu dans un boitier ayant pour interfaces les bornes E0, E1, E3, S1, S2. Ainsi, lors de l'assemblage du système d'alimentation électrique 100, on limite le nombre de composants différents à connecter.

## Revendications

1. Système d'alimentation électrique (100), notamment configuré pour être embarqué dans un véhicule, comprenant :
- une pile à combustible (110) ;
- une batterie (112), notamment configurée pour entraîner ledit véhicule ;
- un convertisseur de tension DCDC entrelacé (114) configuré pour alimenter ladite batterie (112) à partir de ladite pile à combustible (110) ;
- un compresseur (116) configuré pour délivrer un gaz oxydant comprimé à ladite pile à combustible (110) ;
- un onduleur (118) configuré pour alimenter ledit compresseur (116) ;
ledit convertisseur de tension DCDC entrelacé (114) comprenant une pluralité de branches parallèles, dites « branches monodirectionnelles » (114m), comportant chacune un convertisseur élévateur monodirectionnel (50) configuré pour alimenter ladite batterie (112) à partir de la pile à combustible (110) ; et au moins une branche parallèle, dite « branche bidirectionnelle » (114b), comportant un convertisseur élévateur bidirectionnel (60) et une diode (70) dont l'anode est connectée à la pile à combustible (110) et la cathode à une première borne (61) du convertisseur bidirectionnel (60) ;
ledit onduleur (118) étant en outre connecté entre la diode (70) et la première borne (61) du convertisseur élévateur bidirectionnel (60) de manière à recevoir un courant depuis ladite pile à combustible (110) ou depuis ladite batterie (112) pour l'alimentation dudit compresseur (116).

2. Système d'alimentation électrique (100) selon la revendication 1, dans lequel le convertisseur de tension DCDC entrelacé (114) comprend entre 10 et 30% de branches bidirectionnelles (114b).

3. Système d'alimentation électrique (100) selon la revendication 1 ou 2, dans lequel la première borne (61) du convertisseur bidirectionnel (60) est configurée pour être connectée à un composant auxiliaire (115), pour une alimentation dudit composant au démarrage dudit système d'alimentation électrique (100).

4. Système d'alimentation électrique (100) selon l'une des revendications précédentes, dans lequel les convertisseurs monodirectionnels (50) et bidirectionnel (60) comprennent des interrupteurs (Tm, Tb1, Tb2), lesdits interrupteurs (Tm, Tb1, Tb2) étant configurés pour être commandés avec un même rapport cyclique.

5. Système d'alimentation électrique (100) selon l'une des revendications 1 à 3, dans lequel les convertisseurs monodirectionnels (50) et bidirectionnel (60) comprennent des interrupteurs (Tm, Tb1, Tb2), les interrupteurs (Tm) des convertisseurs monodirectionnels (50) étant configurés pour être commandés avec un premier rapport cyclique, et les interrupteurs (Tb1, Tb2) du convertisseur bidirectionnel (60) étant configurés pour être commandés avec un deuxième rapport cyclique.

6. Procédé d'alimentation électrique d'un équipement électrique, ledit équipement électrique étant notamment destiné à entraîner un véhicule, comprenant l'utilisation d'un système d'alimentation électrique (100) selon l'une des revendications précédentes.

7. Procédé d'alimentation d'un équipement électrique selon la revendication précédente, dans lequel un démarrage du système d'alimentation électrique (100) comporte :
- la délivrance à l'onduleur (118) d'un courant issu de la batterie (112) par l'intermédiaire du convertisseur bidirectionnel (60) ;
- la commande de l'onduleur (118) pour alimenter ledit compresseur (116) de manière à initier la production d'énergie électrique par ladite pile à combustible (110) ;
- lorsque la tension (V_{L}) de ladite pile à combustible (110) devient supérieure à la somme de la tension (V_{OND}) à la première borne (61) du convertisseur bidirectionnel (60) et de la tension de seuil de la diode (70), la mise en état passant de la diode (70) de manière à délivrer à l'onduleur (118) un courant issu de ladite pile à combustible (110) pour une alimentation du compresseur (116).

8. Procédé selon la revendication précédente, comprenant après le démarrage du système d'alimentation électrique (100) :
- la commande du système d'alimentation électrique (100) de sorte que le courant délivré par la pile à combustible (110) dans la branche bidirectionnelle (114b) devienne supérieure à un seuil ;
- lorsque ledit courant délivré par la pile à combustible (110) dans la branche bidirectionnelle (114b) est supérieur au dit seuil, l'alimentation du compresseur (116) uniquement à partir d'au moins une première partie du courant délivré par la pile à combustible (110) dans la branche bidirectionnelle (114b).

9. Procédé selon la revendication précédente, comprenant en outre : lorsque ledit courant délivré par la pile à combustible (110)dans la branche bidirectionnelle (114b) est supérieur au dit seuil, l'alimentation de la batterie (112) par l'intermédiaire du convertisseur bidirectionnel (60) par au moins une deuxième partie du courant délivré par la pile à combustible (110) dans la branche bidirectionnelle (114b).

10. Procédé selon l'une des revendications 7 à 9, dans lequel le démarrage du système d'alimentation électrique (100) comprend, en parallèle de la délivrance à l'onduleur (118) d'un courant issu de la batterie (112) par l'intermédiaire du convertisseur bidirectionnel (60), la délivrance d'un courant issu de la batterie (112) par l'intermédiaire du convertisseur bidirectionnel (60) à un composant auxiliaire (115) de l'équipement électrique connecté à la première borne (61) du convertisseur bidirectionnel (60).

11. Procédé selon l'une des revendications 6 à 10, les convertisseurs monodirectionnels (50) et bidirectionnel (60) comprenant des interrupteurs (Tm, Tb1, Tb2) configurés pour être respectivement commandés avec un premier et un deuxième rapports cycliques, le procédé comprenant une suralimentation de la pile à combustible (110) du système d'alimentation électrique (100), ladite suralimentation comportant :
- lorsque la diode (70) est dans un étant passant, la commande du convertisseur bidirectionnel (60) de sorte que la tension (V_{OND}) à la première borne (61) du convertisseur bidirectionnel (60) augmente jusqu'à ce que la tension (V_{D}) aux bornes de la diode (70) soit inférieure à la tension de seuil de la diode (70) ;
- la réception par l'onduleur (118) d'un courant uniquement issu de la batterie (112) ;
- la commande de l'onduleur (118) de sorte à augmenter le débit du compresseur (116).
